# EUROPÄISCHE PATENTSCHRIFT

(11) **EP 4 335 726 B1**
(45) Veröffentlichungstag und Bekanntmachung des Hinweises auf die Patenterteilung: **02.09.2026**
(21) Anmeldenummer: 23186370.5
(22) Anmeldetag: 19.07.2023
(51) Int. Cl.: B62D 5/06, B62D 5/30

(54) **VORRICHTUNG ZUM LENKEN EINER RADBETRIEBENEN MOBILEN ARBEITSMASCHINE**
DEVICE FOR STEERING WHEEL-DRIVEN MOBILE WORKING MACHINE
DISPOSITIF DE DIRECTION POUR ENGIN DE CHANTIER MOBILE À ROUES

(30) Priorität: 30.08.2022 AT 5013422 U
(43) Veröffentlichungstag der Anmeldung: 13.03.2024
(73) Patentinhaber: Wacker Neuson Linz GmbH, 4063 Hörsching (AT)
(72) Erfinder: Löhr, Christian, 4060 Leonding (AT)
(74) Vertreter: Hübscher & Partner Patentanwälte GmbH

(56) Entgegenhaltungen:
- CN-A- 107 985 397
- CN-A- 113 682 371
- DE-A1- 102021 212 221
- KR-A- 20060 000 523
- US-A1- 2020 062 302
- US-A1- 2020 386 248

## Beschreibung

Die Erfindung bezieht sich auf eine Vorrichtung zum Lenken einer radbetriebenen mobilen Arbeitsmaschine, umfassend einen Antriebsstrang zum Verfahren der Arbeitsmaschine und eine hydraulische Lenkung, insbesondere eine Servolenkung, die wenigstens einen an einen Antrieb angeschlossenen Servoenergieerzeuger aufweist, der an ein Servolenkgetriebe zur Lenkkraftenergieversorgung angeschlossen ist, wobei wenigstens ein Servoenergieerzeuger mit dem Antriebskräfte auf die Räder übertragenden starren Antriebsstrang antriebsverbunden ist.

Radbetriebene mobile Arbeitsmaschinen mit Verbrennungsmotoren und hydraulisch unterstützter Lenkung sind in der Regel mit einem Servoenergieerzeuger in Form einer an den Verbrennungsmotor angeschlossenen Lenk- bzw. Arbeitspumpe ausgestattet. Unabhängig davon, ob die Arbeitsmaschine verfahren wird oder steht, wird, solange sich die Verbrennungskraftmaschine dreht, mindestens eine Pumpe Öl an das Servolenkgetriebe liefern und somit die hydraulische Lenkung zur Unterstützung des Fahrers mit Energie versorgen. Damit ist sichergestellt, dass solange sich die Räder und die Verbrennungskraftmaschine drehen, dem Servolenkgetriebe eine gewisse Mindestmenge an Öl zugeführt wird. Nach der DIN EN 474 sind Maschinenhersteller aufgefordert, die Notlenkeigenschaften der fahrenden Maschine vor der Markteinführung neuer Modelle anhand von vorgegeben Prüfszenarien zu überprüfen, wobei ein maximal erlaubtes Lenkmoment nicht überschritten werden darf. Durch die zuvor beschriebene Kopplung des Servoenergieerzeugers an die Verbrennungskraftmaschine ist eine ausreihende Unterstützung gegeben, solange Fluid von der Pumpe zur Lenkung gefördert werden kann.

Elektrisch betriebene Arbeitsmaschinen weisen gegen über verbrennungskraftmaschinenbetriebenen Arbeitsmaschinen diesbezüglich Nachteile auf. Klassisch werden bei mobilen E-Arbeitsmaschinen mindestens zwei getrennte E-Motoren eingesetzt. Mindestens ein E-Motor treibt den Fahrantriebsstrang der Maschine an, damit die Arbeitsmaschine verfahren werden kann. Im Normalbetrieb wird der Fahrer bei der Richtungsänderung durch zusätzliche Hilfsenergie in seiner Lenkbewegung unterstützt. Zu dieser Unterstützung ist auch hier ein Servoenergieerzeuger vorgesehen, der insbesondere einer von einem weiteren E-Motor betrieben wird. Sollten die E-Motoren, welche die Pumpen der Lenkung versorgen, ausfallen, entfällt die Lenkunterstützung für den Fahrer. In diesem Fall wird gar kein Hydraulikfluid von der Pumpe zur Lenkung gefördert und kann die Fahrzeugrichtung nur über die Notlenkeigenschaften geändert werden. Daher müssen bei E-Maschinen, um die normativen Anforderungen zur Lenkunterstützung erfüllen zu können, Lenkgetriebe mit höherer Übersetzung und damit größerem Lenkweg eingesetzt werden, damit die geforderten Notlenkeigenschaften auch ohne Lenkunterstützung erfüllt werden können.

Servolenkungen dienen der Reduzierung der Lenkkraft, also jener Kraft, die zur Betätigung des Lenkrads eines Kraftfahrzeugs beim Lenken im Stand, beim Rangieren oder im Fahrbetrieb nötig ist. Die Servolenkung unterstützt den Fahrer beim Lenken, indem die vom Fahrer aufgebrachte Kraft zum Lenken durch ein Hydrauliksystem oder einen Elektromotor verstärkt wird. Insbesondere bei elektrisch betriebene Arbeitsmaschinen kann die Servounterstützung elektrisch erfolgen. Durch den Wegfall einer mechanischen Kopplung zwischen Verbrennungskraftmaschine und Servoenergieerzeuger wird es bei Elektrofahrzeugen mit steigender Maschinentonnage immer schwieriger die normativen Vorgaben in Bezug auf die geforderten Notlenkeigenschaften zu erfüllen, wenn die Lenkunterstützung ausfallen sollte.

Aus der US20200062302A1 ist eine Vorrichtung gemäß dem Oberbegriff vorbekannt, welche zwei Servolenkungspumpen als Servoenergieerzeuger umfasst.

Der Erfindung liegt somit die Aufgabe zugrunde, eine Vorrichtung zum Lenken einer radbetriebenen mobilen Arbeitsmaschine anzugeben, die eine sichere Unterstützung der Servolenkung mit Notenergie bei Ausfall der Hauptservoenergieversorgung zumindest bis zum Stillstand des Fahrzeuges gestattet. Gerade solange sich die Arbeitsmaschine noch in Fahrt befindet, soll eine Restunterstützung der Lenkung gegeben sein.

Die Erfindung löst die gestellte Aufgabe dadurch, dass der Servoenergieerzeuger über einen Freilauf mit dem Antriebsstrang antriebsverbunden ist..

Dies bedeutet, dass der Servoenergieerzeuger, insbesondere eine Hydraulikpumpe, ein Stromgenerator od. dgl., in den Teil des Antriebsstranges eingebunden ist, der sich immer mit den Rädern mitdreht, also in jenen gangstufen- bzw. kupplungsfreien Teil des Antriebsstranges eingebunden ist, der nicht über ein Getriebe und/oder eine Kupplung von den Rädern abkuppelbar ist. Damit ist sichergestellt, dass der Servoenergieerzeuger eine sichere Unterstützung der Servolenkung mit Notenergie bei Ausfall der Hauptservoenergieversorgung zumindest bis zum Stillstand des Fahrzeuges gestattet, da er sich zwingend bis zum Stillstand des Fahrzeuges mit dem Antriebsstrang mitdreht. Der starre Antriebsstrang bildet somit den Drehantrieb für den Servoenergieerzeuger.

Dabei wird bei mittels Verbrennungskraftmaschine aber insbesondere bei elektrisch betriebenen mobilen Arbeitsmaschinen in den mechanischen Antriebsstrang mindestens eine Hydraulikpumpe als Servoenergieerzeuger integriert, die bei einem Verfahren der Arbeitsmaschine mindestens ausreichend Volumenstrom für die Notlenkeigenschaften zur Verfügung stellt. Bei gewissen Notlenkeigenschaften ist der erforderliche Volumenstrom abhängig von der Fahrgeschwindigkeit der Maschine. Durch die mechanische Einbindung des Servoenergieerzeugers in den die Antriebskräfte auf die Räder übertragenden starren Antriebsstrang ist sichergestellt, dass die Leistung des Servoenergieerzeugers unmittelbar von der Fahrgeschwindigkeit abhängt.

Ist der Servoenergieerzeuger eine Hydraulilkpumpe, die gegebenenfalls als Verstellpumpe ausgeführt ist, der eine Fördermengenregelung und gegebenenfalls eine Förderrichtungsregelung zugeordnet sind, dann ist die Leistung der Notenergie zudem abhängig von der Fahrgeschwindigkeit einstellbar. Je nach Auslegung der Pumpe, könnte die Pumpe auch einen höheren Volumenstrom zur Verfügung stellen und bei ordnungsgemäßer Funktion der Servolenkung überhaupt auf Nullförderung gestellt werden um keine unnötigen Verluste im Antriebsstrang in Kauf nehmen zu müssen.

Diese Pumpe zur Lenkunterstützung im mechanischen Antriebsstrang kann als Konstant- und Verstellpumpe ausgeführt werden. Durch Änderung der Verdrängervolumens der Pumpe kann der Volumenstrom auf den Bedarf der Lenkung angepasst werden, dass z.B. bei hoher Fahrgeschwindigkeit kein Volumenstromüberschuss gefördert wird. Andersherum kann aufgrund der Lenksystemauslenkung die Lenkunterstützungspumpe im mechanischen Antriebsstrang nicht ausreichend Volumenstrom für die Lenkung im Normalbetrieb bereitstellen, dabei kann die Volumenstromdifferenz mit einer weiteren Pumpe bedarfsgerecht beigesteuert werden.

In analoger Weise kann der Servoenergieerzeuger auch ein Elektrogenerator sein, der ein elektromechanisches Lenkgetriebe mit Energie versorgt.

Um einfache Konstruktionsverhältnisse zu schaffen kann der Servoenergieerzeuger über ein Gleichrichtergetriebe mit dem Antriebsstrang antriebsverbunden sein. Unter der Bezeichnung Gleichrichtergetriebe werden Getriebe verstanden, die Drehbewegungen unterschiedlicher Drehrichtung in Drehbewegungen gleichbleibender Drehrichtung umwandeln. Dies kann erreicht werden, indem zwischen Getriebeantrieb und -abtrieb Freilauf- bzw. Sperrvorrichtungen vorgesehen sind. Solche Mechanismen sind in der Konstruktion von Transportanlagen, Werkzeugmaschinen, Uhrwerken, Messgeräten usw. bekannt. Damit ist sichergestellt, dass der Servoenergieerzeuger stets mit ein und derselben Drehrichtung angetrieben wird, egal, ob die Arbeitsmaschine in oder entgegen ihrer Hauptfahrrichtung verfahren wird. Damit kann eine einfacherer Servoenergieerzeuger eingesetzt werden, der nur auf eine Drehrichtung ausgelegt sein muss.

Erfindungsgemäß ist der Servoenergieerzeuger über einen Freilauf mit dem Antriebsstrang antriebsverbunden. Damit besteht die Möglichkeit den Servoenergieerzeuger mit einem Elektromotor zu betreiben, der den Servoenergieerzeuger in Freilaufrichtung antreibt, also schneller dreht, als die in den Antriebsstrang eingebundene Antriebswelle. Bei einem Ausfall dieses Elektromotors sperrt der Freilauf und sorgt der Antriebsstrang für die nötige Bereitstellung der Servoenergie.

Wichtig ist, dass die Notlenkfunktion mindestens in die Hauptfahrrichtung noch ausreichend Unterstützung bei Notlenkung zur Verfügung stellen kann, da in der Hauptfahrrichtung deutlich höhere Geschwindigkeiten auftreten und dabei das System mit allen Vorteilen auch bei Normallenkung ausspielen kann. Besser ist es aber, wenn die Lenkunterstützungspumpe in beide Fahrrichtungen ihre Unterstützung zur verfügen stellen kann, wobei dazu der Systemaufwand etwas höher ist. Dies ist darin begründet, da durch die direkte Anbindung in den mechanischen Fahrantriebsstrang sich bei Vor- und Rückwärtsfahrt alle rotierende Antriebsstrangkomponenten in beide Richtungen dreht. Daher muss entweder die Pumpe so ausgelegt sein, dass diese mit wechselnder Antriebsrichtung immer Richtung Lenksystem fördert oder der mechanische Pumpenantrieb immer nur eine Drehrichtung zur Verfügung stellt, wozu dann das Gleichrichtergetriebe vorzusehen ist.

Je nach Systemaufbau kann der Servoenergieerzeuger im E-Fahrantriebsmotor integriert oder an diesen angeflanscht werden, im Getriebe integriert bzw. angeflanscht, am Differential integriert bzw. angeflanscht werden sowie in den Antriebswellen Richtung der Räder integriert oder angeflanscht werden. Kurz gesagt, irgendwo zwischen E-Fahrmotor und Rädern ist diese Pumpe zu integrieren.

Die Servolenkung kann in an sich bekannter Weise wenigstens einen an einen Elektromotor angeschlossenen Servoenergieerzeuger aufweisen. Bei einem Ausfall dieses Elektromotors wird die nötige Lenkenergie erfindungsgemäß dadurch bereitgestellt, dass wenigstens ein Servoenergieerzeuger mit dem Antriebskräfte auf die Räder übertragenden starren Antriebsstrang antriebsverbunden ist. Damit wird bis zum Stillstand des Fahrzeuges, allerdings nicht im Stillstand, eine gewisse Notlenkenergie bereitgestellt. Über einer gewissen Geschwindigkeitsswelle kann die erfindungegemäße Anordnung sogar die volle Lenkenergie bereitstellen. Deshalb kann es von Vorteil sein, um insbesondere elektrische Energie zu sparen, wenn der Elektromotor den ihm zugeordneten Servoenergieerzeuger im Normalbetrieb im Stillstand und bis zu einer bestimmten Geschwindigkeitsschwelle betreibt und wenn der starre Antriebsstrang, der ja bei einem Verfahren der Arbeitsmaschine stets Lenkenergie bereitstellt, den ihm zugeordneten Servoenergieerzeuger über der Geschwindigkeitsschwelle alleine betreibt, der Elektromotor über dieser Schwelle also abgeschaltet wird.

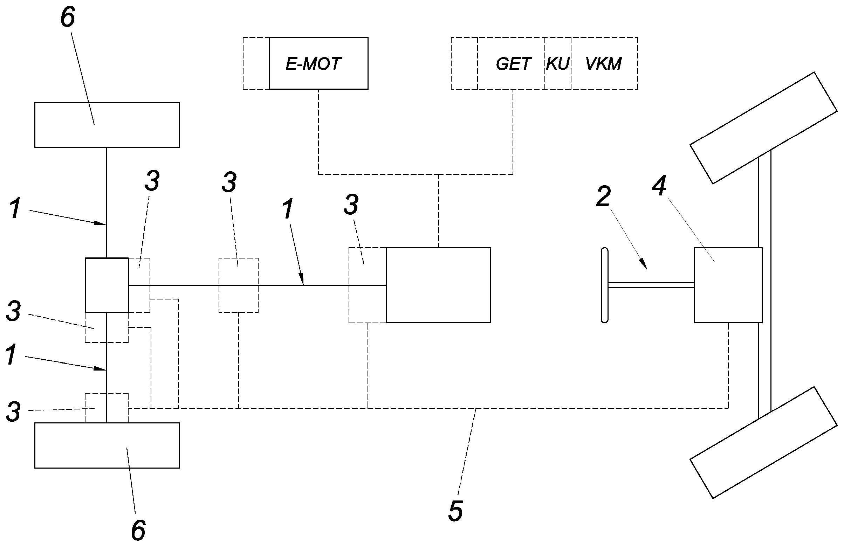

In der Zeichnung ist der Erfindungsgegenstand beispielsweise anhand einer schematischen Draufsicht auf einen Antriebsstrang dargestellt.

Eine Vorrichtung zum Lenken einer radbetriebenen mobilen Arbeitsmaschine umfasst einen Antriebsstrang 1 zum Verfahren der Arbeitsmaschine und eine Servolenkung 2, die wenigstens einen an einen Antrieb angeschlossenen Servoenergieerzeuger 3 aufweist, der an ein Servolenkgetriebe 4 zur Lenkkraftenergieversorgung über Leitungen 5 angeschlossen ist. Wenigstens ein Servoenergieerzeuger 3 ist mit dem Antriebskräfte auf die Räder 6 übertragenden starren (gangstufen und Kupplungsfreien) Antriebsstrang 1 antriebsverbunden.

Der Servoenergieerzeuger 3 ist entweder eine Hydraulilkpumpe oder ein Elektrogenerator. Die Hydraulilkpumpe kann insbesondere als Verstellpumpe ausgeführt sein, der eine Fördermengenregelung und gegebenenfalls eine Förderrichtungsregelung zugeordnet sind.

Der Servoenergieerzeuger 3 kann über ein Gleichrichtergetriebe mit dem Antriebsstrang antriebsverbunden sein.

Der Servoenergieerzeuger 3 ist erfindungsgemäß über einen Freilauf mit dem Antriebsstrang antriebsverbunden.

Der Servoenergieerzeuger 3 ist im starren Antriebsstrang eines Fahrzeuges mit Elektroantrieb E-MOT zwischen Antriebsrädern 6 und Fahrantriebsmotor, gegebenenfalls im E-Fahrantriebsmotor angeordnet. In der Zeichnung sind nicht abschließende Möglichkeiten der Anordnung im Antriebsstrang angedeutet.

Der im starren Antriebsstrang eines Bei Fahrzeugen mit Verbrennungsraftmaschine VKM ist der Servoenergieerzeuger 3 zwischen Antriebsrädern 6 und Schaltgetriebe GET, gegebenenfalls im Schaltgetriebe GET angeordnet. Üblicherweise ist das Schaltgetriebe GET über eine Kupplung KU an die Verbrennungsraftmaschine VKM angeflanscht.

## Patentansprüche

1. Vorrichtung zum Lenken einer radbetriebenen mobilen Arbeitsmaschine, umfassend einen Antriebsstrang (1) zum Verfahren der Arbeitsmaschine und eine hydraulische Lenkung, insbesondere eine Servolenkung (2), die wenigstens einen an einen Antrieb angeschlossenen Servoenergieerzeuger (3) aufweist, der an ein Servolenkgetriebe (4) zur Lenkkraftenergieversorgung angeschlossen ist, wobei wenigstens ein Servoenergieerzeuger (3) mit dem Antriebskräfte auf die Räder übertragenden starren Antriebsstrang (1) antriebsverbunden ist, **dadurch gekennzeichnet, dass** der Servoenergieerzeuger (3) über einen Freilauf mit dem Antriebsstrang (1) antriebsverbunden ist.

2. Vorrichtung nach Anspruch 1, **dadurch gekennzeichnet, dass** der Servoenergieerzeuger (3) eine Hydraulilkpumpe ist.

3. Vorrichtung nach Anspruch 2, **dadurch gekennzeichnet, dass** die Hydraulilkpumpe als Verstellpumpe ausgeführt ist, der eine Fördermengenregelung und gegebenenfalls eine Förderrichtungsregelung zugeordnet sind.

4. Vorrichtung nach Anspruch 1, **dadurch gekennzeichnet, dass** der Servoenergieerzeuger (3) ein Elektrogenerator ist.

5. Vorrichtung nach einem der Ansprüche 1 bis 4, **dadurch gekennzeichnet, dass** der Servoenergieerzeuger (3) über ein Gleichrichtergetriebe mit dem Antriebsstrang (1) antriebsverbunden ist.

6. Vorrichtung nach einem der Ansprüche 1 bis 5, **dadurch gekennzeichnet, dass** der Servoenergieerzeuger (3) im starren Antriebsstrang (1) eines Fahrzeuges mit Elektroantrieb zwischen Antriebsrädern (6) und Fahrantriebsmotor, gegebenenfalls im E-Fahrantriebsmotor (E-MOT) angeordnet ist.

7. Vorrichtung nach einem der Ansprüche 1 bis 5, **dadurch gekennzeichnet, dass** der Servoenergieerzeuger (3) im starren Antriebsstrang (1) eines Fahrzeuges mit Verbrennungsraftmaschine (VKM) zwischen Antriebsrädern (6) und Schaltgetriebe (GET), gegebenenfalls im Schaltgetriebe (GET) angeordnet ist.

8. Vorrichtung nach einem der Ansprüche 1 bis 7, **dadurch gekennzeichnet, dass** die Servolenkung (2) wenigstens einen an einen Elektromotor angeschlossenen Servoenergieerzeuger (3) aufweist, wobei der Elektromotor den ihm zugeordneten Servoenergieerzeuger (3) im Stillstand und bis zu einer Geschwindigkeitsschwelle betreibt und wobei der starre Antriebsstrang (1) den ihm zugeordneten Servoenergieerzeuger (3) über der Geschwindigkeitsschwelle alleine betreibt.

## Claims

1. Device for steering a wheel-driven mobile work machine, comprising a drive train (1) for moving the work machine and a hydraulic steering system, in particular a power steering system (2), which has at least one servo energy generator (3) connected to a drive, which energy generator (3) is connected to a power steering gear (4) for steering-force energy supply, wherein at least one servo energy generator (3) is drivingly connected to the rigid drive train (1) transmitting drive forces to the wheels, **characterized in that** the servo energy generator (3) is drivingly connected to the drive train (1) via a freewheel.

2. Device according to claim 1, **characterized in that** the servo energy generator (3) is a hydraulic pump.

3. Device according to claim 2, **characterized in that** the hydraulic pump is embodied as a variable-displacement pump, to which a delivery-volume control and optionally a delivery-direction control are assigned.

4. Device according to claim 1, **characterized in that** the servo energy generator (3) is an electric generator.

5. Device according to one of claims 1 to 4, **characterized in that** the servo energy generator (3) is drivingly connected to the drive train (1) via a direction-rectifying gear.

6. Device according to one of claims 1 to 5, **characterized in that** the servo energy generator (3) is arranged in the rigid drive train (1) of a vehicle having an electric drive between drive wheels (6) and a traction drive motor, optionally in the electric traction drive motor (E-MOT).

7. Device according to one of claims 1 to 5, **characterized in that** the servo energy generator (3) is arranged in the rigid drive train (1) of a vehicle having an internal combustion engine (VKM) between drive wheels (6) and a manual transmission (GET), optionally in the manual transmission (GET).

8. Device according to one of claims 1 to 7, **characterized in that** the power steering system (2) has at least one servo energy generator (3) connected to an electric motor, wherein the electric motor operates the servo energy generator (3) assigned thereto at standstill and up to a speed threshold, and wherein the rigid drive train (1) alone operates the servo energy generator (3) assigned thereto above the speed threshold.

## Revendications

1. Dispositif destiné à diriger un engin de chantier mobile à roues, comprenant un groupe d'entraînement (1) pour déplacer l'engin de chantier et une direction hydraulique, en particulier une direction assistée (2), qui présente au moins un servogénérateur d'énergie (3) qui est connecté à un entraînement et est connecté à un boîtier de direction assistée (4) pour fournir l'énergie de force de direction, dans lequel au moins un servogénérateur d'énergie (3) est relié en entraînement au groupe d'entraînement (1) rigide qui transmet les forces d'entraînement aux roues, **caractérisé en ce que** le servogénérateur d'énergie (3) est relié en entraînement au groupe d'entraînement (1) par le biais d'une roue libre.

2. Dispositif selon la revendication 1, **caractérisé en ce que** le servogénérateur d'énergie (3) est une pompe hydraulique.

3. Dispositif selon la revendication 2, **caractérisé en ce que** la pompe hydraulique est réalisée sous la forme d'une pompe à cylindrée variable à laquelle sont affectées une régulation de débit et éventuellement une régulation de sens de transport.

4. Dispositif selon la revendication 1, **caractérisé en ce que** le servogénérateur d'énergie (3) est un générateur électrique.

5. Dispositif selon l'une des revendications 1 à 4, **caractérisé en ce que** le servogénérateur d'énergie (3) est relié en entraînement au groupe d'entraînement (1) par le biais d'un boîtier redresseur.

6. Dispositif selon l'une des revendications 1 à 5, **caractérisé en ce que** le servogénérateur d'énergie (3) est disposé, dans le groupe d'entraînement (1) rigide d'un véhicule à entraînement électrique, entre les roues motrices (6) et le moteur d'entraînement de conduite, éventuellement dans le moteur d'entraînement de conduite électrique (E-MOT).

7. Dispositif selon l'une des revendications 1 à 5, **caractérisé en ce que** le servogénérateur d'énergie (3) est disposé dans le groupe d'entraînement (1) rigide d'un véhicule à moteur à combustion interne (VKM) entre les roues motrices (6) et la boîte de vitesses (GET), éventuellement dans la boîte de vitesses (GET).

8. Dispositif selon l'une des revendications 1 à 7, **caractérisé en ce que** la direction assistée (2) présente au moins un servogénérateur d'énergie (3) connecté à un moteur électrique, dans lequel le moteur électrique actionne le servogénérateur d'énergie (3) qui lui est affecté lorsqu'il est à l'arrêt et jusqu'à un seuil de vitesse et dans lequel le groupe d'entraînement (1) rigide actionne tout seul le servogénérateur d'énergie (3) qui lui est affecté au-delà du seuil de vitesse.
